# EUROPEAN PATENT APPLICATION

(11) **EP 2 380 756 A1**
(43) Date of publication of application: **26.10.2011**
(21) Application number: 11162724.6
(22) Date of filing: 15.04.2011
(51) Int. Cl.: B60C 9/02

(54) **Carcass ply for a pneumatic tire**

(30) Priority: 26.04.2010 US 767171
(71) Applicant: The Goodyear Tire & Rubber Company, Akron, OH 44316-0001 (US)
(72) Inventor: Zhao, Junling, Hudson, OH 44236 (US); Smesko, Kenneth William, Uniontown, OH 44685 (US); Till, Douglas Andrew, Akron, OH 44313 (US); Skurich, Michael Stefan, Canton, OH 44718 (US); Westgate, Walter Kevin, Uniontown, OH 44685 (US); Kish, James Christopher, Akron, OH 44319 (US)
(74) Representative: Kutsch, Bernd

(57) **Abstract**

A pneumatic tire comprising a carcass reinforced by at least one carcass ply and at least one belt ply disposed radially outward of the carcass ply in a crown portion of the pneumatic tire is disclosed. The carcass ply comprises at least one composite cord (30) having at least one first yarn (32) and at least one second, electrically conductive filament or yarn (34) wrapped together with the at least one first yarn (32). The at least one first yarn (32) has a Young's modulus at room temperature less than the Young's modulus at room temperature of the at least one second, electrically conductive filament or yarn (34).

## Description

### Field of the Invention

The present invention is directed towards a runflat or non-runflat pneumatic tire. More specifically, the present invention is directed towards a pneumatic tire wherein a carcass ply comprises a hybrid cord.

### Background of the Invention

A hybrid cord may be formed of two different materials: a low initial modulus core yarn and high modulus wrap yarns. The selection of the yarns is often such that the "break point" of the cord (i.e., when the slope of the force versus elongation curve changes from a relatively low slope to a relatively high slope) occurs between 2% - 3% elongation, with an ultimate cord break at over 5% elongation. Another hybrid carcass ply cord is formed of aramid and nylon twisted together, wherein the break point of the cord occurs between 4% - 6% elongation, with an ultimate cord break at over 10% elongation. In an overlay, the hoop reinforcing effects of a strong cord are desired. However, the hybrid cord must have elongation properties to permit the tire to expand into a toroidal shape during tire molding.

A conventional run-flat tire often has two carcass reinforcing plies and reinforcing wedge inserts in the tire sidewalls. The wedge inserts may resist radial deflection of the tire with a combination of compressive and bending stresses in both the inflated, as well as uninflated, conditions. In the uninflated condition, runflat tires experience a net compressive load in the region of the sidewall closest to the road-contacting portion of the tire. The outer portions of the sidewall experience tensile forces while the inner portions of the sidewall undergo compression stresses during bending. The conventional runflat tire balances the necessary flexibility in the inflated condition with the necessary rigidity in the uninflated condition by employing two reinforcing carcass plies. The axially outermost ply has cords with a modulus of elasticity that increases with strain. The axially innermost ply has cords with a modulus that exceeds that of the outermost ply during normal loads in an inflated condition. Thus, the innermost ply supports the majority of the load during normal operation, while the outermost ply only support a minority of the load.

When a conventional run-flat tire is operated in an uninflated condition, the load is shifted from the axially innermost ply to the axially outermost ply and again the plies do not equally contribute to the support of the load. The outermost ply thereby does not contribute to the overall rigidity of the tire sidewall during normal operation in the inflated condition.

Another conventional runflat tire has a single carcass ply and at least one insert located adjacent the carcass ply in a sidewall portion. The insert provides support for the tire load to enable the tire to operate in an uninflated condition.

### Definitions

The following definitions are controlling for the disclosed invention.

"Axial" and "axially" are used herein to refer to lines or directions that are parallel to the axis of rotation of the tire.

"Belt structure" means one or at least two annular layers or plies of parallel cords, woven or unwoven, underlying the tread, unanchored to the bead, and having cords inclined with respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Circumferential" means lines or directions extending along the perimeter of the surface of the annular tire parallel to the Equatorial Plane (EP) and perpendicular to the axial direction.

"Cord" means one of the reinforcement strands which the plies of the tire comprise.

"Cord angle" means the acute angle, left or right in a plan view of the tire, formed by a cord with respect to the equatorial plane. The "cord angle" is measured in a cured but uninflated tire.

"Denier" means the weight in grams per 9000 meters (unit for expressing linear density). Dtex means the weight in grams per 10,000 meters.

"Equatorial plane (EP)" means the plane perpendicular to the tire's axis of rotation and passing through the center of its tread.

"Fiber" is a unit of matter, either natural or man-made that forms the basic element of filaments. Characterized by having a length at least 100 times its diameter or width.

"Filament count" means the number of filaments that make up a yarn. Example: 1000 denier polyester has approximately 190 filaments.

"High Tensile Steel (HT)" means a carbon steel with a tensile strength of at least 3400 Spa @ 0.20 mm filament diameter.

"Inner" means toward the inside of the tire and "outer" means toward its exterior.

"Lateral" means an axial direction.

"Lay length" means the distance at which a twisted filament or strand travels to make a 360 degree rotation about another filament or strand.

"Mega Tensile Steel (MT)" means a carbon steel with a tensile strength of at least 4500 MPa @ 0.20 mm filament diameter.

"Normal Tensile Steel (MT)" means a carbon steel with a tensile strength of at least 2800 MPa @ 0.20 mm filament diameter.

"Radial" and "radially" are used to mean directions radially toward or away from the axis of rotation of the tire.

"Super Tensile Steel (ST)" means a carbon steel with a tensile strength of at least 3650 MPa @ 0.20 mm filament diameter.

"Ultra Tensile Steel (UT)" means a carbon steel with a tensile strength of at least 4000 MPa @ 0.20 mm filament diameter.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of the Invention

The invention relates to a tire in accordance with claim 1.

Dependent claims refer to preferred embodiments of the invention.

A pneumatic tire in accordance with the present invention includes a carcass reinforced by a carcass ply. The carcass ply preferably enables transmission of a static electrical charge from the vehicle to ground. The pneumatic further includes at least one belt ply disposed radially outward of the carcass ply in a crown portion of the pneumatic tire. The carcass ply includes at least one composite cord having at least one first yarn with preferably at least one second electrically conductive filament wrapped together with the first yarn such that the first yarn has a modulus less than a modulus of the second electrically conductive filament.

In accordance with another aspect of the present invention, the first yarn is selected from the group consisting of: rayon, nylon, polyamide 6 and 6,6, PET, PK, and PEN.

In accordance with still another aspect of the present invention, the second electrically conductive filament is selected from the group consisting of: Normal, High, Super, Ultra, and Mega tensile steels, titanium, and aluminum, with a filament diameter in the range between 0.04 mm to 0.41 mm.

In accordance with yet another aspect of the present invention, the first yarn has a linear density value in the range between 940 dtex to 3680 dtex.

In accordance with still another aspect of the present invention, the composite cord has a structure of core yarn(s) versus outer electrically conductive filaments selected from the group consisting of: 1/1, 1/2, 2/2, 3/2, 1/3, 2/3, 3/3, and 4/3.

In accordance with yet another aspect of the present invention, the carcass ply has an end count of composite cord ends per inch in the range between 15 to 32.

In accordance with still another aspect of the present invention, the first yarn is a nylon yarn.

In accordance with yet another aspect of the present invention, the second electrically conductive filament is a steel filament.

In accordance with yet another aspect of the present invention, the tire is a runflat passenger tire.

In yet a preferred aspect of the invention, each of the at least one second, electrically conductive filament(s) is coated with an organic or a metallic coating such as a brass, copper, an organic silane, or an other coating providing an improved adhesion between the filament and a rubber ply material. Preferably, the coating has a thickness in a range of from 50 µm to 80 µm.

### Brief Description of the Drawings

The invention will be described by way of example and with reference to the accompanying drawings in which:
FIG. 1 is a schematic representation of cross sectional view of an example tire for use with the present invention;
FIG. 2 is a schematic representation of an example carcass ply cord construction in accordance with the present invention; and
FIG. 3 is a schematic representation of another example carcass ply cord construction in accordance with the present invention.

### Detailed Description of an Example of the Present Invention

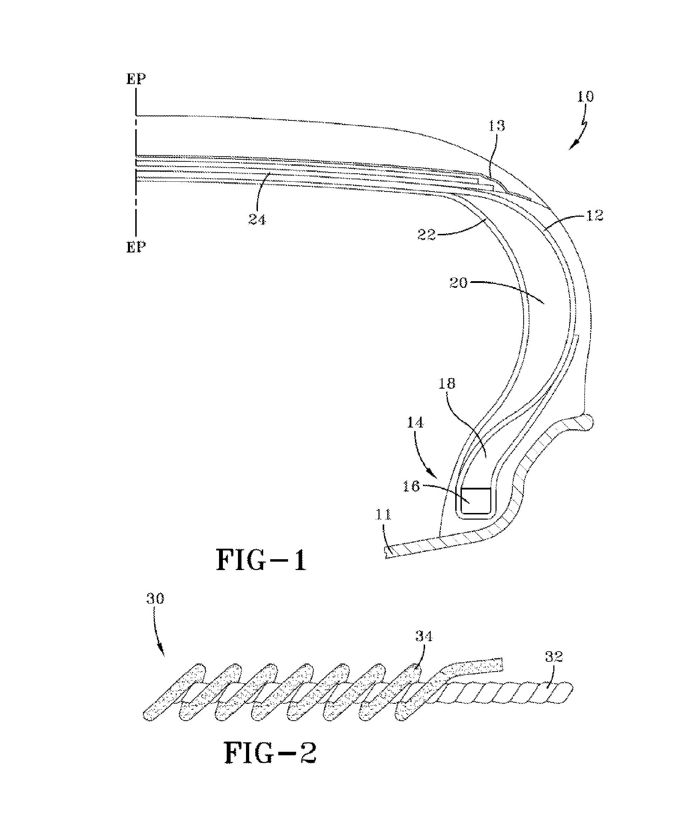

FIG. 1 is a cross-sectional view of an example pneumatic tire 10 for use with the present invention. The example tire 10 is mounted on a tire rim 11, designed to be capable of continued operation during inflated and uninflated conditions. Only one half of the tire 10 is shown, it being understood that the other half is a mirror image of that which is illustrated. The example tire 10 has a single reinforcing carcass ply 12 extending from one bead area 14 of the tire to an opposing bead area (not shown). The ends of the carcass ply 12 are turned axially inward to axially outward about bead cores 16 and bead apexes 18. Terminal ends of the carcass ply 12 extend past radially outer ends of the bead apexes 18 thereby enveloping the bead apexes.

Located in each sidewall region of the example tire 10 is preferably a sidewall insert 20. The sidewall insert 20 may be alternatively disposed adjacent to a tire innerliner 22 (FIG. 1) or axially outward of the carcass ply 12 (not shown). The sidewall insert 20 is formed of elastomeric material and extends from a crown area of the example tire 10 from radially inward of a belt reinforcement structure 24 to radially inward of terminal ends of the bead apexes 18. The elastomeric material of the sidewall insert 20, or wedge, is selected to provide the example tire 10 with support during uninflated, or runflat, operation of the tire.

The belt reinforcement structure 24, disposed radially outward of the carcass ply 12, preferably has at least two inclined, crossed cord plies. The cords of the inclined plies are inclined with respect to a circumferential direction of the example tire 10. Preferably, the cords of radially adjacent plies are inclined at similar, but opposing, angles to each other.

Outward of the belt reinforcement structure 24 may be an overlay 13. The overlay 13 may have an axial width equal to, or greater than, a maximum axial width of the crossed cord plies of the belt reinforcement structure 24, thereby encapsulating the crossed cord plies between the overlay 13 and the carcass ply 12. The overlay may be reinforced with cords inclined at angles of 0°- 15° relative to an equatorial plane EP of the example tire 10.

In accordance with the present invention, the carcass ply 12 is formed from at least one example cord 30 as seen in FIG. 2. The example cord 30 is a composite, or hybrid, cord made of yarns and electrically conductive filaments of appropriate characteristics to provide a runflat, low rolling resistance, or high performance tire, such as the example tire 10. The cord 30 is formed of at least one low modulus core yarn 32 about which is twisted at least one coated conductive filament 34. The construction of the cord 30 allows the lower modulus core yarn (32 in FIG. 2) of the cord 30 to work at a relatively low strain (i.e., normal operating condition) until the cord has reached a specific allowable elongation. From this point (i.e., an uninflated or high speed inflated condition), the higher modulus outer conductive filament (34 in FIG. 2) limits the stretch of the cord 30 as well as provides a route for electrical grounding under all operating conditions.

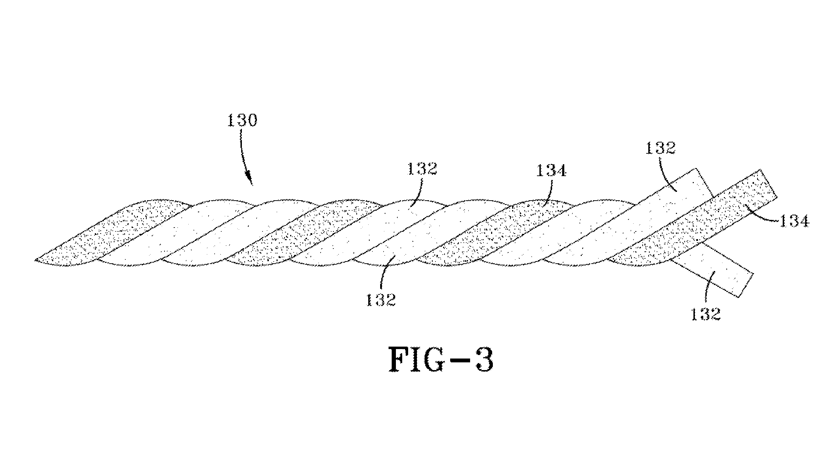

In accordance with an other embodiment of the present invention, the carcass ply 12 is formed from at least one other example cord 130 as seen in FIG. 3. The example cord 130 is a composite, or hybrid, cord made of yarns and electrically conductive filaments of appropriate characteristics to provide a runflat, low rolling resistance, or high performance tire, such as the example tire 10. The cord 130 is formed of at least one (two shown) low modulus yarns 132 twisted together with at least one coated conductive filament 34. The construction of the cord 130 allows the lower modulus yarn(s) (132 in FIG. 3) of the cord 130 to work at a relatively low strain (i.e., normal operating condition) until the cord has reached a specific allowable elongation. From this point (i.e., an uninflated or high speed inflated condition), the higher modulus conductive filament (134 in FIG. 3) limits the stretch of the cord 130 as well as provides a route for electrical grounding under all operating conditions.

Suitable materials for the low modulus core yarn(s) 32, 132 include rayon, nylon polyamide 6 and 6,6, polyethylene terephthalate (PET), and polyethylene napthalate (PEN). Suitable materials for the high modulus outer conductive filament(s) 34, 134 include Normal Tensile Steel, High Tensile Steel, Super Tensile Steel, Ultra Tensile Steel, Mega Tensile Steel, titanium, stainless steel, aluminum.

Material selection is based on the desired stress/strain characteristics and electrical conductivity of the hybrid cord 30, 130 as a whole. However, a typical characteristic is that the outer wrap conductive filament(s) 34, 134 has a moduli greater than the core yarn(s) 32, 132. Thus, for example, the outer wrap conductive filament(s) 34, 134 may be Super tensile steel with rayon core yarn(s) 32, 132 or the outer wrap metallic filament(s) may be titanium with polyamide 6 core yarn(s).

The number of low modulus core yarns 32, 132 is preferably no greater than five while the number of high modulus outer wrap metallic filaments is preferably no greater than ten. For example, the number of low modulus core yarns 32, 132 versus high modulus outer wrap conductive filaments 34, 134 in the cord 30, 130 is 1/1, 1/2, 2/1, 2/2, 3/2, 1/3, 2/3, 3/3 or 4/3. FIG. 2 illustrates a 1/1 construction with a single core yarn 32 and a single outer wrap conductive filament 34. FIG. 3 illustrates a 1/2 construction with two yarns 132 and a single conductive filament 134.

In the example cord 30, each of the core yarn(s) 32 is twisted a given number of turns per unit of length, usually expressed in turns per inch (TPI). Additionally, the core yarn 32 and the outer filament 34 are preferably twisted together a given number of turns per unit of length (TPI) for the yarns and lay lengths, such as between 3 mm and 25 mm, for the conductive filaments of the cord 30. The direction of twist refers to the direction of slope of the spirals of a yarn, metallic filament, or cord when it is held vertically.

Visually, if the slope of the spirals appears to conform in direction to the slope of a letter "S," then the twist is termed "S" or "left handed." If a slope of the spirals appears to visually conform in direction to the slope of a letter "Z," then the twist is termed "Z" or "right handed." An "S" or "left handed" twist direction is understood to be a direction opposite to a "Z" or "right handed" twist. "Twist" is understood to mean the twist imparted to a yarn or filament/yarn component before the yarn or filament/yarn component is incorporated into a cord. "Cord twist" is understood to mean the twist imparted to two or more yarns and filaments/yarns when twisted together with one another to form the cord. "Dtex" is understood to mean the weight in grams of 10,000 meters of a yarn before the yarn has a twist imparted thereto.

For example, core yarn(s) 32, such as polyester or polyamide (nylon), with a diameter of 0.3 mm to 0.9 mm and a twist of 5-15 TPI, may be helically wrapped with conductive filaments(s) 34, such as titanium, stainless steel, with a 50-80 micron metallic or organic coating for adhesion to rubber. The metallic filament(s) may have twists of S, Z, or S & Z, and additional filaments 34 at 3-14 TPI lay lengths. Such a cord 30 in a carcass ply 12 thus produces good fatigue performance. The carcass ply 12 targets may be Modulus > 5000 MPa at 100°C, 100 % Adhesion, and glass transition (tg) > 85°C for a gauge less than 0.22 inches (0.56mm). The adhesion coating may be materials such as brass, copper, an organic silane, or a Chem-lock metal adhesive from Lord Chemical to improve rubber adhesion.

Further, since fuel economics and the need to preserve the environment have become global priorities, it has become desirable to produce a tire with low rolling resistance (RR). The RR prediction contribution for all components of a tire has become critical. In order to achieve minimum RR for a tire, tread hysteresis and carcass hysteresis (i.e, sidewall, chafer, ply coat, etc.) have been reduced. When significantly reducing hysteresis of any compounds, such as tread and sidewall, the electrical conductivity of the compound becomes less, resulting in an increase of static electricity in a vehicle thereby interfering with the on-board computer system. Thus, a conductive path is desirable. For example, a path, or chimney, for conductivity has been added to a tread cap of a low RR tread.

Additionally, increasing conductivity of a ply by adding conductive filaments, such as metallic wires or conductive polymers, into a ply fabric with a good conductive ply coat compound allows the use of a non-conductive and low RR sidewall and apex in order to further reduce RR of the tire. Thus, a conductive path may be, for example, established through ground, chimney, belts, ply and ply coat, toeguard, chafer, and a rim.

As stated above, a carcass ply 12 of hybrid cords 30 in accordance with the present invention produces excellent fatigue performance in a tire 10 as well as allowing use harder, less conductive materials in other parts of the tire 10 for improved RR. This carcass ply 12 thus enhances the performance of the tire 10, even though the complexities of the structure and behavior of the pneumatic tire are such that no complete and satisfactory theory has been propounded. Temple, Mechanics of Pneumatic Tires (2005). While the fundamentals of classical composite theory are easily seen in pneumatic tire mechanics, the additional complexity introduced by the many structural components of pneumatic tires readily complicates the problem of predicting tire performance. Mayni, Composite Effects on Tire Mechanics (2005). Additionally, because of the non-linear time, frequency, and temperature behaviors of polymers and rubber, analytical design of pneumatic tires is one of the most challenging and underappreciated engineering challenges in today's industry. Mayni.

A pneumatic tire has certain essential structural elements. United States Department of Transportation, Mechanics of Pneumatic Tires, pages 207-208 (1981). An important structural element is the carcass ply, typically made up of many flexible, high modulus cords of natural textile, synthetic polymer, glass fiber, or fine hard drawn steel embedded in, and bonded to, a matrix of low modulus polymeric material, usually natural or synthetic rubber. Id. at 207 through 208.

The flexible, high modulus cords are usually disposed as a single layer. Id. at 208. Tire manufacturers throughout the industry cannot agree or predict the effect of different twists of carcass ply cords on noise characteristics, handling, durability, comfort, etc. in pneumatic tires, Mechanics of Pneumatic Tires, pages 80 through 85.

These complexities are demonstrated by the below table of the interrelationships between tire performance and tire components.

| | LINER | CARCASS PLY | APEX | BELT | OV'LY | TREAD | MOLD |
|---|---|---|---|---|---|---|---|
| | | | | | | | |
| TREADWEAR | | | | X | | X | X |
| NOISE | | X | X | X | X | X | X |
| HANDLING | | X | X | X | X | X | X |
| TRACTION | | | | | | X | X |
| DURABILITY | X | X | X | X | X | X | X |
| ROLL RESIST | X | | X | X | | X | X |
| RIDE COMFORT | X | X | X | | | X | |
| HIGH SPEED | | X | X | X | X | X | X |
| AIR RETENTION | X | | | | | | |
| MASS | X | X | X | X | X | X | X |

As seen in the table, carcass ply cord characteristics affect the other components of a pneumatic tire (i.e., carcass ply affects apex, belt, overlay, etc.), leading to a number of components interrelating and interacting in such a way as to affect a group of functional properties (noise, handling, durability, comfort, high speed, and mass), resulting in a completely unpredictable and complex composite. Thus, changing even one component can lead to directly improving or degrading as many as the above ten functional characteristics, as well as altering the interaction between that one component and as many as six other structural components. Each of those six interactions may thereby indirectly improve or degrade those ten functional characteristics. Whether each of these functional characteristics is improved, degraded, or unaffected, and by what amount, certainly would have been unpredictable without the experimentation and testing conducted by the inventors.

Thus, for example, when the structure (i.e., twist, cord construction, etc.) of the carcass ply cords of a pneumatic tire is modified with the intent to improve one functional property of the pneumatic tire, any number of other functional properties may be unacceptably degraded. Furthermore, the interaction between the carcass ply cords and the apex, belt, carcass, and tread may also unacceptably affect the functional properties of the pneumatic tire. A modification of the carcass ply cords may not even improve that one functional property because of these complex interrelationships.

Thus, as stated above, the complexity of the interrelationships of the multiple components makes the actual result of modification of a carcass ply, in accordance with the present invention, impossible to predict or foresee from the infinite possible results. Only through extensive experimentation have the carcass ply 12 and cords 30, 130 of the present invention been revealed as an excellent, unexpected, and unpredictable option for a tire carcass.

## Claims

1. A pneumatic tire comprising a carcass reinforced by at least one carcass ply (12) and at least one belt ply (24) disposed radially outward of the carcass ply (12) in a crown portion of the pneumatic tire (10), the carcass ply (12) comprising at least one composite cord (30) having at least one first yarn (32) and at least one second, electrically conductive filament or yarn (34) wrapped together with the at least one first yarn (32), the at least one first yarn (32) having a Young's modulus at room temperature less than the Young's modulus at room temperature of the at least one second, electrically conductive filament or yarn (34).

2. The pneumatic tire of claim 1 wherein the second, electrically conductive filament or yarn (34) is an electrically conductive filament.

3. The pneumatic tire of claim 1 or 2 wherein the carcass ply (12) enables a transmission of a static electrical charge from a vehicle on which the pneumatic tire (10) is mounted to the ground.

4. The pneumatic tire of at least one of the previous claims wherein the at least one first yarn (32) is made from a material selected from the group consisting of: rayon, nylon, polyamide 6, polyamide 6,6, polyethylenterephthalat (PET), polyketone (PK), and polyethylene naphthalate (PEN).

5. The pneumatic tire of at least one of the previous claims wherein the at least one second, electrically conductive filament or yarn (34) is a metallic filament or yarn or is made from a material selected from the group consisting of: normal tensile steel, high tensile steel, super tensile steel, ultra tensile steel, mega tensile steel, stainless steel, titanium, a titanium alloy, aluminum, and an aluminium alloy.

6. The pneumatic tire of at least one of the previous claims wherein the at least one second, electrically conductive filament (34) has a filament diameter in the range of from 0.04 mm to 0.41 mm, alternately from 0.1 mm to 0.25 mm.

7. The pneumatic tire of at least one of the previous claims wherein the at least one first yarn (32) has a linear density value in the range of from 940 dtex to 3680 dtex, alternatively from 1300 dtex to 3000 dtex or from 2000 dtex to 2600 dtex.

8. The pneumatic tire of at least one of the previous claims wherein the at least one first yarn (32) is a core yarn and the at least one second, electrically conductive filament or yarn (34) is an outer filament or yarn (34) wrapped about the core yearn.

9. The pneumatic tire of at least one of the previous claims wherein the composite cord (30) has a cord structure selected from the group consisting of: 1/1, 1/2, 2/2, 3/2, 1/3, 2/3, 3/3, and 4/3; and/or wherein the composite cord (30) has a cord structure of core yarn(s) versus outer electrically conductive filament(s) selected from the group consisting of: 1/1, 1/2, 2/2, 3/2, 1/3, 2/3, 3/3, and 4/3.

10. The pneumatic tire of at least one of the previous claims wherein the carcass ply (12) has an end count of cord ends per 2.54 cm in the range of from 15 to 32, alternatively from 20 to 28.

11. The pneumatic tire of at least one of the previous claims wherein the first yarn (32) or the core yarn is a nylon yarn, and/or the second filament (34) or second outer filament (34) is a steel filament.

12. The pneumatic tire of at least one of the previous claims wherein the composite cord (30) comprises one, two, three, four or five first yarn(s) or core yarn(s) (32); and/or wherein the at least one second, electrically conductive yarn (34) comprises in a range of from 1 to 10 filaments such as one, two, three, four, five, six, seven, eight, nine or ten filaments.

13. The pneumatic tire of at least one of the previous claims wherein the composite cord (30) consists of a single core yarn (32) and a single outer metallic filament (34).

14. The pneumatic tire of at least one of the previous claims wherein the at least one first yarn (32) has a Young's modulus at room temperature which is at least 50% less, alternatively at least 70% or at least 90% less, than the Young's modulus at room temperature of the at least one second, electrically conductive filament or yarn (34).

15. The pneumatic tire of at least one of the previous claims wherein the at least one first yarn (32) has a diameter in the range of from 0.3 mm to 0.9 mm, alternatively from 0.45 to 0.75 mm, and a twist in the range of from 5 to 15 turns per 2.54 cm (TPI), and the at least one second, electrically conductive filament or yarn (34) is wrapped about the at least one first yarn (32) with a twist in the range of from 3 to 14 turns per 2.54 cm (TPI).
